**Europäisches Patentamt**

**European Patent Office** (11) Veröffentlichungsnummer: **0 007 011**

**Office européen des brevets** **B1**

(12) **EUROPÄISCHE PATENTSCHRIFT**

(45) Veröffentlichungstag der Patentschrift: **06.05.81**

(21) Anmeldenummer: **79101925.0**

(22) Anmeldetag: **13.06.79**

(51) Int. Cl.³: **B 01 J 2/20,** C 05 F 7/00, C 02 F 11/14

(54) Vorrichtung zum kontinuierlichen Vermischen und Granulieren von Schlamm mit einem Feststoff.

(30) Priorität: **18.07.78 DE 2831418**

(43) Veröffentlichungstag der Anmeldung:
**23.01.80 Patentblatt 80/2**

(45) Bekanntmachung des Hinweises auf die Patenterteilung:
**06.05.81 Patentblatt 81/18**

(84) Benannte Vertragsstaaten:
**AT BE CH DE FR GB LU NL SE**

(56) Entgegenhaltungen:
**DE - A - 2 523 628**
**DE - C - 2 956**
**DE - C - 1 767 541**
**FR - A - 469 427**
**FR - A - 2 329 938**

**Korrespondenz Abwasser, Heft 2, 1977 Seiten 46ff.**

(73) Patentinhaber: **Rheinische Kalksteinwerke GmbH.**
**Wilhelmstrasse 77**
**D-5603 Wülfrath (DE)**

(72) Erfinder: **Reichelt, Rainer, Dipl.-Ing.Dr.**
**Mülheimerstrasse 17**
**D-4030 Ratingen (DE)**
Erfinder: **Mral, Heinz, Ing.-grad.**
**Westfalenweg 239**
**D-5600 Wuppertal 1 (DE)**
Erfinder: **Ziess, Volker, Dipl.-Ing.**
**Bollenberger Busch 5**
**D-5657 Haan 1 (DE)**
Erfinder: **Clausdorff, Theodor**
**Bruchhauser Weg 1**
**D-4010 Hilden (DE)**

(74) Vertreter: **Wiensz, Klaus, Dr.**
**Postfach 100 506**
**D-4020 Mettmann (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Vorrichtung zum kontinuierlichen Vermischen und Granulieren von Schlamm mit einem Feststoff

Die vorliegende Erfindung betrifft eine Vorrichtung zum kontinuierlichen Vermischen von wasserhaltigem Schlamm, insbesondere Klärschlamm, mit einem hydratisierbaren bzw. hydraulisch abbindenden Feststoff und zum Granulieren der Mischung, im wesentlichen bestehend aus Schlamm- und Feststoffdosier- sowie Misch- und Granuliereinrichtungen.

Auf dem Gebiet der Abwasserbeseitigung werden zunehmend Anstrengungen vorgenommen, den anfallenden Klärschlamm entweder in eine deponierfähige festere Konsistenz zu überführen, oder aber durch Zusatz von weiteren verfestigenden Stoffen zu granulieren, um dann dieses Granulat als Düngemittel bzw. als Bodenverbesserungsmittel einsetzen zu können. So ist es zum Beispiel bekannt, den Klärschlamm mit gebranntem Kalk zu vermischen, wobei der Kalk durch den Wassergehalt des Klärschlamms hydratisiert wird; die Mischung erhitzt sich dabei auf Temperaturen bis zu 100°C und mehr, so daß gleichzeitig eine Sterilisierung des Klärschlamms erfolgt. Das auf diese Weise gewonnene Erzeugnis kann daher unmittelbar und unbedenklich entweder in pulveriger Form oder als Granulat als Bodenverbesserungsmittel bzw. als kalkhaltiger Dünger in der Landwirtschaft eingesetzt werden und belastet nicht die Deponie.

Die technische Durchführung des Verfahrens bereitet jedoch insbesondere bei kontinuierlicher Betriebsweise eine Reihe von Schwierigkeiten, die im wesentlichen dadurch bedingt sind, daß hier Stoffe mit unterschiedlicher Konsistenz, also Schlämme einerseits und Feststoffe, andererseits, mit ausreichender Dosiergenauigkeit zu mischen sind. Es kommt hinzu, daß der gebrannte Kalk mit dem Wasseranteil des Schlamms exotherm unter Bildung von Calciumhydroxid reagiert, wobei sich die Mischung vorübergehend verfestigt und wobei ferner ein Teil des Wassers aus dem Schlamm verdampft. Durch die Verfestigung der Mischung entstehen leicht Verkrustungen an den Fördereinrichtungen, insbesondere im Bereich der Dosierstrecke, wodurch der kontinuierliche Materialfluß erheblich gestört wird. Auch bei getrennter Zuführung der Stoffe ergeben sich Störungen des Materialflußes durch Verstopfungen an den Übergabestellen, so daß auch diese Methode nicht zum Erfolg geführt hat. Versuche in der Praxis haben weiterhin gezeigt, daß die Wassergehalte der Schlämme schwanken und daher auch deren Konsistenz.

Es bestand daher die Aufgabe, eine Misch- und Granuliereinrichtung zu schaffen für Mischungen aus einem Schlamm und einem Feststoff, welche trotz der zuvor geschilderten Schwierigkeiten eine einwandfreie kontinuierliche Betriebsweise ermöglicht und den sich ändernden Betriebsverhältnissen schnell und optimal angepaßt werden kann.

Es wurde gefunden, daß diese Aufgabe durch eine Vorrichtung lösbar ist, bei welcher für den Schlamm und den Feststoff eine gemeinsame Fördereinrichtung vorgesehen ist, die derart ausgebildet ist, dass sie im Bereich der Schlammdosierung mit vollem Füllungsgrad bzw. voller Förderkapazität als Dosiereinrichtung arbeitet und im Bereich der in Förderrichtung gesehen nachgeordneten Feststoffzudosierung jedoch so ausgebildet ist, dass der volle Füllungsgrad nicht erreicht wird, und dass sich daran die Mischeinrichtung und die Granuliereinrichtung anschliessen.

Bei einer vorteilhaften Ausführungsform der Vorrichtung wird als gemeinsame Fördereinrichtung eine Förderschnecke vorgesehen, deren Sneckengangsteigung vom Bereich der Feststoffdosierung an in Förderrichtung größer ausgelegt oder deren Schneckendurchmesser bei gleicher Schneckengangsteigung vergrößert ist.

Eine Variante der vorteilhaften Ausführungsform besteht darin, daß als gemeinsame Fördereinrichtung eine Kratzförderer vorgesehen ist, und daß der Kanal des Kratzförderers vom Bereich der Feststoffdosierung an vergrößert ausgelegt ist.

An beiden vorgenannten Ausführungsformen ist durch die Vergrößerung des Förderraumes im Bereich der Dosierung des Feststoffes gewährleistet, daß ein Rückstau nicht erfolgt und ebenso, daß Verkrustungen in diesem Bereich nicht auftreten können. Erfindungsgemäß wird ferner eine weitere vorteilhafte Ausführungsform der Vorrichtung darin gesehen, daß die gemeinsame Dosiereinrichtung von der Schlammdosierung bis zur Feststoffdosierung einerseits und die nachfolgende Mischeinrichtung andererseits getrennt antreibbar und regelbar eingerichtet sind. Diese Technik dient der besseren Anpassung der Anlage an schwankende Betriebsbedingungen und sie verhindert ebenfalls Verkrustungen im Anschluß an die Feststoffdosierung. Durch entsprechende Steuerung der Mischstrecke kann beispielsweise die Mischung den Erfordernissen besser angepaßt werden.

Weiterhin kann es vorteilhaft sein, auch die Granuliereinrichtung von den übrigen Einrichtungen getrennt antreibbar und regelbar einzurichten. Dadurch kann die Granulierung so gesteuert werden, daß ein Granulat der jeweils gewünschten Korngrößenverteilung entsteht.

Sollen mit Hilfe der Vorrichtung Container mit Fertiggut gefüllt werden, so kann man einerseits die Anlage auch schwenkbar, seitlich verfahrbar oder die Förderstrecke für das Fertiggut schwenkbar ausbilden; andererseits können auch die Container selbsttätig verfahrbar sein, sobald sie gefüllt sind.

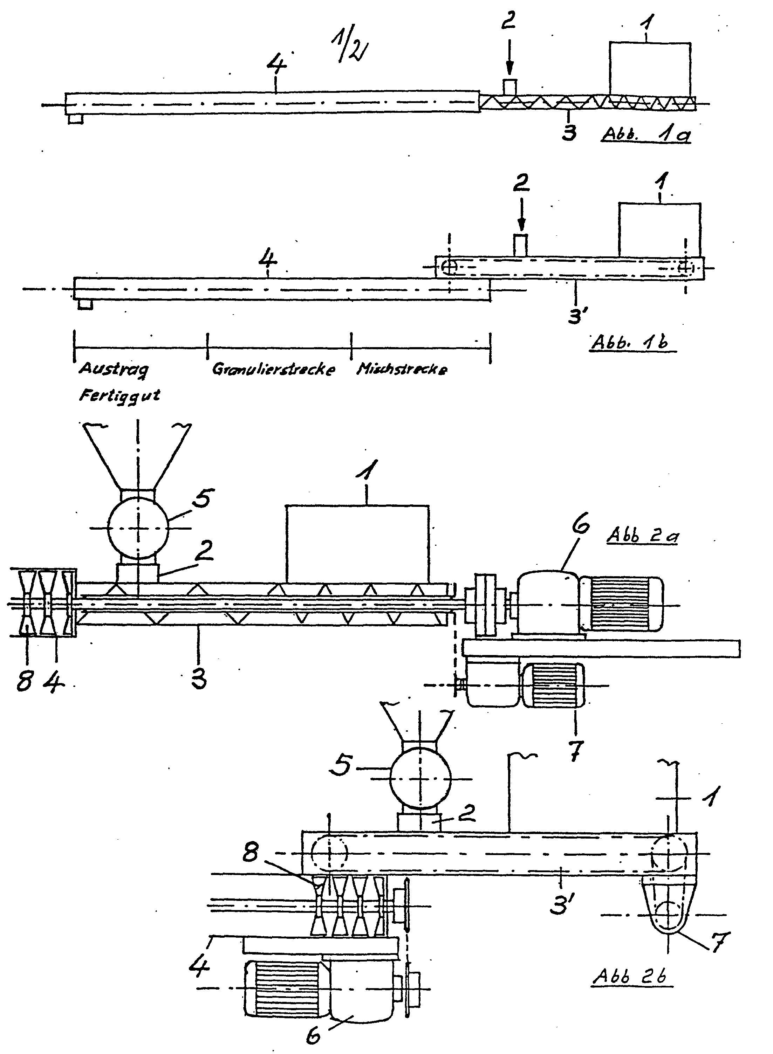

Die Zeichnungen Figuren 1—4 sollen die erfindungsgemäße Vorrichtung beispielhaft verdeutlichen. Im einzelnen zeigen die Figuren 1a und 1b schematische Darstellungen der Vorrichtung von der Schlammdosierung, der Feststoffdosierung sowie den nachfolgenden Misch-, Granulier- und Förderstrecken. Mit 1 ist der Schlammbunker bezeichnet, dem der z.B. durch Zentrifugen auf etwa 20% Feststoffgehalt entwässerte Schlamm zugeführt wird, 2 bezeichnet die Zugabestelle für den Feststoff und 3 die beiden Einrichtungen gemeinsame Fördereinrichtung, welche verfahrenstechnisch sich in der Misch-, Granulier- und Förderstrecke 4 fortsetzt. Die Abbildung 1a mit der angedeuteten Förderschnecke 3 und die Abbildung 1b mit dem angedeuteten Kratzförderer 3' werden in den Abbildungen 2a und 2b jeweils verdeutlicht. Abbildung 2a zeigt als gemeinsame Fördereinrichtung für Schlamm und Feststoff eine Mischschnecke mit in Förderrichtung zunehmender Steigung des Schneckengangs; der Feststoff wird z.B. über eine Zellenradschleuse zugegeben. 6 und 7 sind die getrennt steuer- und/oder regelbaren Antriebe für die gemeinsame Fördereinrichtung einerseits und Misch-, Granulier- und Förderstrecke 4 andererseits.

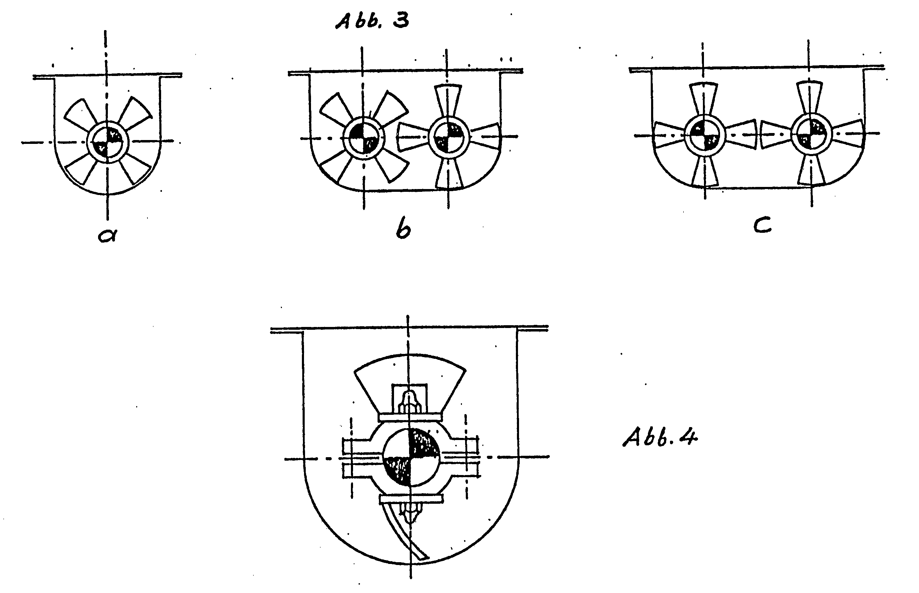

Mit 8 sind die Paddel der Mischstrecke bezeichnet, Figur 2b zeigt den gleichen Teil der Anlage wie Figur 2a mit der Abweichung, daß als gemeinsame Fördereinrichtung 3' ein Kratzförderer vorgesehen ist. In Figur 3 sind Einzelheiten der Misch- und Granulierwerkzeuge dargestellt. In der Praxis hat sich eine Anordnung dieser Art bewährt, wobei in einem abdeckbaren Trog Mischpaddel auf einer Antriebswelle montiert sind, die im einfachsten Falle gemäß Abbildung 3a oder aber als Doppelpaddeleinrichtung gemäß Figur 3b oder 3c eingerichtet sein kann.

Die gemäß Figur 3b bzw. 3c gezeigten Doppelpaddelmischwerkzeuge können entweder gemäß Abbildung 3b ineinander oder gemäß Figur 3c nebeneinander arbeiten. Schließlich zeigt Figur 4 eine vorteilhafte Anordnung der Paddelbefestigung auf der Misch- und Granulierwelle. Die Paddel sind dabei, wie auf der schematischen Abbildung leicht erkennbar ist, verstellbar angeordnet. Durch entsprechende Verstellung und Arrangierung der Mischpaddel kann man die Mischung und den Granuliervorgang im gewünschten Sinne beeinflussen.

Bei der Durchführung des Verfahrens mit Hilfe der erfindungsgemäßen Vorrichtung geht man zweckmäßig von einem Klärschlamm aus, der z.B. durch Zentrifugieren auf einen geeigneten Feststoffgehalt (z.B. 20%) vorentwässert wurde. Dieser Schlamm hat noch genügend flüssige Konsistenz, um ihn in der erfindungsgemäßen Vorrichtung verarbeiten zu können. Als Feststoff kann handelsüblicher Branntkalk genügender Feinheit verwendet werden. Anstelle von Branntkalk kann jedoch auch Elektrofilterstaub bzw. Zement oder auch gebrannter Dolomit eingesetzt werden. Die Mengenverhältnisse an Zusatzstoffen im Verhältnis zum eingesetzten Schlamm richten sich nach der Art des gewünschten Erzeugnisses. Wenn ein deponierfähiger Schlamm erzeugt werden soll, genügen im allgemeinen geringe Zusatzmengen. Zur Erzeugung eines granulierfähigen Düngemittels müssen dagegen höhere Mengen eingesetzt werden. Mengenverhältnisse und typische Beispiele hierfür sind in der Literatur beschrieben, z.B. in Korrespondenz Abwasser, Heft 2 1977, S. 46 u. ff.

**Patentansprüche**

1. Vorrichtung zum kontinuierlichen Vermischen von wasserhaltigem Schlamm, insbesondere Klärschlamm, mit einem hydratisierbaren bzw. hydraulisch abbindenden Feststoff und zum Granulieren der Mischung, im wesentlichen bestehend aus Schlamm- und Feststoffdosier- sowie Misch- und Granuliereinrichtungen für das Gemisch, dadurch gekennzeichnet, dass für den Schlamm und den Feststoff eine gemeinsame Fördereinrichtung vorgesehen ist, die derart ausgebildet ist, dass sie im Bereich der Schlammdosierung mit vollem Füllungsgrad bzw. voller Förderkapazität als Dosiereinrichtung arbeitet und im Bereich der in Förderrichtung gesehen nachgeordneten Feststoffzudosierung jedoch so ausgebildet ist, dass der volle Füllungsgrad nicht erreicht wird, und dass sich daran die Mischeinrichtung und die Granuliereinrichtung anschliessen.

2. Vorrichtung nach Anspruch 1, dadurch gekennzeichnet, dass als gemeinsame Fördereinrichtung eine Förderschnecke vorgesehen ist, deren Schneckengangsteigung vom Bereich der Feststoffdosierung an in Förderrichtung grösser ausgelegt oder deren Schneckendurchmesser bei gleicher Schneckengangsteigung vergrössert ist.

3. Vorrichtung nach Anspruch 1, dadurch gekennzeichnet, dass als gemeinsame Fördereinrichtung ein Kratzförderer vorgesehen ist und dass der Kanal des Kratzförderers vom Bereich der Feststoffdosierung an vergrössert ausgelegt ist.

4. Vorrichtung nach den Ansprüchen 1—3, dadurch gekennzeichnet, dass die gemeinsame Fördereinrichtung von der Schlammdosierung bis zur Feststoffdosierung einerseits und die Mischeinrichtung andererseits getrennt antreibbar und regelbar eingerichtet sind.

5. Vorrichtung nach den Ansprüchen 1—4, dadurch gekennzeichnet, dass die Granuliereinrichtung von den übrigen Einrichtungen getrennt antreibbar und regelbar eingerichtet ist.

**Revendications**

1. Installation pour mélanger en continu de la boue aqueuse, notamment de la boue de décantation, avec une matière solide apte à s'hydrater, ou aussi bien faisant prise par voie hydraulique, et pour granuler le mélange, se composant pour l'essentiel de dispositifs de dosage de boue et de matière solide ainsi que de mélange et de granulation, installation caractérisée en ce qu'il est prévu pour la boue et la matière solide un dispositif transporteur commun, qui est réalisé de telle manière, que dans la zone du dosage de boue il fonctionne comme dispositif doseur à plein taux de remplissage, ou aussi bien à pleine capacité de transport, mais, dans la zone du dosage additionnel de matière solide, prévu à la suite vu dans le sens du transport, est réalisé de telle manière que le plein taux de remplissage n'y est pas atteint, et que le dispositif de mélange et le dispositif de régulation lui font directement suite.

2. Installation selon la revendication 1, caractérisée in ce que, comme dispositif transporteur commun est prévu un transporteur à vis sans fin, dont le pas de vis est rendu plus grand à partir de la zone du dosage de matière solide dans le sens du transport, ou dont le diamètre de vis est agrandi tandis que le pas de vis est uniforme.

3. Installation selon la revendication 1, caractérisée en ce que, comme dispositif transporteur commun est prévu un transporteur à raclettes, et que le canal du transporteur à raclettes est réalisé de façon à être agrandi à partir de la zone du dosage de matière solide.

4. Installation selon les revendications 1—3, caractérisée en ce que le dispositif transporteur commun, du dosage de boue au dosage de matière solide, d'une part, et le dispositif de mélange d'autre part, sont agencés de façon à pouvoir être entraînés et réglés séparément.

5. Installation selon les revendications 1—4, caractérisée en ce que le dispositif de granulation est agencé de façon à pouvoir être entraîné et réglé séparément des autres dispositifs.

**Claims**
1. An apparatus for continuous mixing of aqueous sludge, in particular sewage sludge, using a hydratable or hydraulically setting solid substance, and for granulating the mixture, essentially consisting of sludge and solid substance metering devices and mixing and granulation devices for the mixture, characterised in that a common conveying device is provided for the sludge and the solid substance, which device is designed such that it operates as a metering device with a full filling degree or a full conveying capacity in the region of the sludge dosage, but is designed in the region of the solid substance dosage, located downstream as viewed in the direction of conveyance, such that the full filling degree is not attained, and that the mixing device and the granulation device are connected thereto.

2. An apparatus according to claim 1, characterised in that a screw conveyor is provided as the common conveying device, the screw thread pitch of the screw conveyor being greater in the conveying direction from the region of the solid substance dosage onwards, or the screw conveyor having a constant screw thread pitch being enlarged.

3. An apparatus according to claim 1, characterised in that a scraper conveyor is provided as the common conveying device and that the channel of the scraper conveyor is designed to be larger from the region of the solid substance dosage onwards.

4. An apparatus according to claims 1 to 3, characterised in that, on the one hand, the common conveying device from the sludge dosage up to the solid substance dosage and, on the other hand, the device are installed so that they may be driven and controlled separately.

5. An apparatus according to the claims 1 to 4, characterised in that the granulation device is installed so that it may be driven and controlled separately from the remaining devices.

0 007 011

1/2

Abb. 1a

Abb. 1b

Austrag          Granulierstrecke    Mischstrecke
Fertiggut

Abb 2a

Abb 2b

1

Abb. 3

a

b

c

Abb. 4

0 007 011